# EUROPEAN PATENT SPECIFICATION

(11) **EP 2 625 035 B1**
(45) Date of publication and mention of the grant of the patent: **03.10.2018**
(21) Application number: 11746050.1
(22) Date of filing: 15.07.2011
(51) Int. Cl.: B32B 17/10

(54) **IMPROVED MIRRORS FOR CONCENTRATING SOLAR POWER (CSP) OR CONCENTRATING PHOTOVOLTAIC (CPV) APPLICATIONS, AND/OR METHODS OF MAKING THE SAME**
VERBESSERTE SPIEGEL FÜR SONNENENERGIEKONZENTRATION (CSP) ODER KONZENTRATION VON FOTOVOLTAISCHEN (CPV) ANWENDUNGEN UND/ODER VERFAHREN ZU IHRER HERSTELLUNG
MIROIRS AMÉLIORÉS DESTINÉS À DES APPLICATIONS PERMETTANT DE CONCENTRER L'ÉNERGIE SOLAIRE (CSP) OU DE CONCENTRER DES ÉLÉMENTS PHOTOVOLTAÏQUES (CPV) ET/OU LEURS PROCÉDÉS DE RÉALISATION

(30) Priority: 08.10.2010 US 923836
(43) Date of publication of application: 14.08.2013
(73) Proprietor: Guardian Glass, LLC, Auburn Hills MI 48326 (US)
(72) Inventor: VANDAL, Robert, A., Syracuse IN 46567 (US); WANG, Yei-Ping (Mimi) H., Troy MI 48098 (US)
(74) Representative: Hess, Peter K. G.
(86) International application number: PCT/US2011/001249
(87) International publication number: WO 2012/047248

(56) References cited:
- EP-A2- 2 206 991
- WO-A1-2007/108861
- WO-A1-2010/042311
- WO-A1-2011/090469
- WO-A1-2011/090784

## Description

### FIELD OF THE INVENTION

Certain example embodiments of this invention relate to improved mirrors and/or reflective articles, and/or methods of making the same. More particularly, certain example embodiments relate to techniques for creating flat laminated mirrors, e.g., for use in concentrating solar power (CSP) or concentrating photovoltaic (CPV) applications.

### BACKGROUND AND SUMMARY OF EXAMPLE EMBODIMENTS OF THE INVENTION

The energy needs of society are constantly growing. Techniques to meet this growing energy demand are continually sought after. One area of focus has been in the area of solar power. Solar power technology can take various forms. One technique is to use photovoltaic technology to convert light into electrical current. Another technique is called concentrating solar power or CSP.

Generally speaking, CSP uses mirrors to focus the radiation from the sun into a small area. This small area may be, for instance, a tower in the middle of field of mirrors. The concentrated heat formed at the focal point (e.g., at the tower) may then be used to as a heat source in a conventional power plant (e.g., to run a turbine that creates electrical current), or for any other thermal application such as, for example, sea water desalination. Concentrated energy from mirrors may also be used to focus on photovoltaic cells to potentially increase their output.

Various types of mirrors may be used in CSP applications. Parabolic mirrors, for instance, are structured to focus a broad beam of light (e.g., light from the sun) into a single point. However, parabolic mirrors can be difficult and/or expensive to produce and maintain. Another type of mirror that may be used in CSP applications is a flat mirror. These mirrors sometimes have an advantage of being cheaper and easier to maintain than their parabolic counterparts.

The overall efficiency of a CSP application may relate to how efficiently the power plant captures the energy from the sun's radiation. One technique to improve the efficiency CSP applications may be to employ tracking technology that facilitates optimal positioning of the CSP mirrors in relation to the position of the sun in the sky (e.g., the mirrors may track the sun as the sun progress across the sky).

Another factor in the efficiency of CSP applications may be the reflective efficiency of the mirrors. Mirrors with higher reflectance rates will increase the overall efficiency of CSP applications. Accordingly, high reflectance mirrors are continually sought after in order to improve the efficiency of CSP applications.

One challenge lies in how to protect these mirrors from the environments in which they are located, which often are quite harsh. Indeed, it will be appreciated that CSP applications may be placed in harsh environments that may be subject to high wind loads and/or other conditions. A large piece of glass exposed to high winds may have a large amount of force directed to the exposed surface area of the glass substrate. The strength of the glass has been found to be generally proportional to the square of its thickness. Accordingly, if the wind force applied to the surface of the glass exceeds the structural strength of the glass the glass (and mirror) may break.

A broken mirror may have several additional negative consequences. First, the broken glass of the mirror may present a safety hazard to people working with the mirror (e.g., by the shards of glass). Second, a painted backing layer may contain a certain percentage of lead in it. This lead concentration may make disposal of the now broken mirror a hazardous process. Third, as the structural integrity for the mirror as a whole may be substantially dependent on the structural integrity of the glass substrate, a loss in the glass substrates structural integrity (e.g., breaking) may be substantially carried over to the mirror as a whole. Thus, when a glass substrate breaks, the entire glass surface may be completely destroyed resulting in a complete loss of the mirror and its reflective functionality.

Thus it will be appreciated the structural strength of the mirror may need to be sufficient to prevent breakage, especially in high wind environments.

To overcome structural stability issues, some mirrors have sometimes included relatively thick glass substrates. Unfortunately, however, the use of thicker glass substrates can negatively affect the performance of the mirror, e.g., as a result of higher absorption, reduced reflectance from the mirror, etc. Even very high transmission glass likely will not transmit 100% of the light impinging on it. Thus, some light will not reach the mirror coating on the back side of the glass, and some of the light reflected from the mirror coating on the back side of the glass will not be transmitted back out of the glass. Thus, increasing the thickness of the glass used on the mirror may lead to reduced reflectance rates and, ultimately, reduced efficiency in CSP applications. Additionally, the conventional technique of increasing the structural strength in mirrors by increasing the thickness of the glass substrate also increases the cost of entire assembly, e.g., as a result of high material costs because high transmission low iron solar glass types are typically of higher cost than regular glass.

One or more layers of paint may be provided to conventional mirrors, e.g., to help protect the layered coating from the environment. Unfortunately, however, the applied paint may still be susceptible to UV radiation. Accordingly, in order to protect the paint from UV radiation the thickness of the silver coating in the layered coating may be increased in order to provide sufficient protection. As will be appreciated, this extra thickness of silver may further increase the cost of a mirror.

A reflector (e.g., mirror) for use in a solar collector or the like is known from WO 2007/108861 A1. In certain example embodiments, a reflector is made by (a) forming a reflective coating on a thin substantially flat glass substrate (the thin glass substrate may or may not be pre-bent prior to the coating being applied thereto), (b) optionally, if the glass substrate in (a) was not prebent, then cold-bending the glass substrate with the reflective coating thereon; and (c) applying a plate or frame member to the thin bent glass substrate with the coating thereon from (a) and/or (b), the plate or frame member (which may be another thicker pre-bent glass sheet, for example) for maintaining the thin glass substrate and coating thereon in a desired bent orientation in a final product which may be used as parabolic trough or dish type reflector in a concentrating solar power apparatus or the like.

A solar collector system according to WO 2010/042311 A1 includes a plurality of reflectors. Each reflector has a stiffening rib associated therewith and is attached thereto on a side facing away from the sun. At least one area on each stiffening rib is suitable for accommodating a polymer-based adhesive for bonding the rib to a side of the associated reflector facing away from the sun. Each stiffening rib is formed so as to substantially match a contour of the associated reflector. At least two of the rib, the associated reflector, and the adhesive have respective coefficients of thermal expansion within about 50% of one another. Each stiffening rib is sized and positioned on the associated reflector so as to increase an EI value thereof at least about 10 times or to at least about 9,180 pascal meters4. Methods of making the same also are provided.

EP 2 206 991 A2 proposes a solar collector system including a plurality of reflectors is provided. In certain example embodiments, a bracket or pad is bonded to a reflecting panel. The bracket has at least one fastening element protruding therefrom. The fastening element cooperates with at least a hole formed in a mounting frame for securing the panel to a frame, e.g., in mounting the panel. In certain example embodiments, the at least one fastening element comprises two deformable tabs. In certain example embodiments, the at least one fastening element is a shoulder screw that cooperates with a keyhole and slot arrangement provided to the mounting frame, with the shoulder screw being held in place by an optional spring clip.

Thus, it will be appreciated that techniques for increasing (or maintaining) the durability of mirrors in CSP application while also maintaining (or increasing) a mirrors reflectance percentage are continuously sought after. It also will be appreciated that there exists a need in the art for improved mirrors and the like that, for example, can be used in CSP applications. The present invention provides a solution according to the subject matter of the independent claims.

In certain example embodiments, a method of making an article is provided. A first low-iron glass substrate is provided, with the first substrate having a thickness of about 0.5-3 mm. A reflective coating is disposed (e.g., deposited) on a major surface of the first substrate. A second glass substrate that is substantially parallel to the first substrate is provided, with the second substrate being oriented over the reflective coating (and in certain example instances with the second substrate being at least as thick as the first substrate). The first substrate with the reflective coating disposed (e.g., deposited) thereon and the second substrate are laminated together with an appropriate laminating material or film having properties that ensure good bonding to the substrate surfaces with appropriate sealing and durability characteristics. The reflective article has a reflectivity of at least 94.5 percent.

In certain example embodiments, a method of making an article is provided. A first low-iron glass substrate is provided, with the first substrate having a thickness of about 0.5-3 mm. A multi-layer thin-film reflective coating is disposed (e.g., deposited) on a major surface of the first substrate. The reflective coating comprises, in order moving away from the substrate, a tin-inclusive layer, an Ag-inclusive layer directly contacting the tin-inclusive layer, and a copper-inclusive layer directly contacting the Ag-inclusive layer. A second glass substrate that is substantially parallel to the first substrate is provided, with the second substrate being oriented over the reflective coating (and in certain example instances with the second substrate being at least as thick as the first substrate). In certain example embodiments, the second glass substrate may be thinner than the first glass substrate. For example, in certain example instances, a 2 mm backing glass substrate may be used in connection with a 4 mm front glass substrate to help reduce (and sometimes even avoid) the need for a paint layer provided for longer term durability.

The second substrate has an iron content higher than an iron content of the first substrate (e.g., as a cost reduction measure). The first substrate with the reflective coating disposed (e.g., deposited) thereon and the second substrate are laminated together using an appropriate lamination layer or film and a heating profile selected to account for the different heating profiles of the first and second substrates caused by the differing iron contents.

In certain example embodiments, a coated article is provided. A first low-iron glass substrate has a thickness of 0.5-3 mm. A reflective coating comprising a plurality of thin film layers is disposed (e.g., deposited) on a major surface of the first substrate. A second substrate is substantially parallel to the first high transmission substrate, with the second substrate having a higher iron content than the first substrate (and in certain example instances-being at least twice as thick as the first substrate). The first and second substrates are laminated together with PVB. The PVB hermetically seals the reflective coating between the first and second substrates having good adhesion to the top layer of the reflective coating as well as the second glass layer. The reflective article has a reflectivity above 90 percent.

In certain example embodiments, the periphery of reflective coating may be deleted or not applied at all (e.g., via a suitable masking process). In certain example embodiments, the first substrate has a thickness of around 1.6 mm and the second substrate may have a thickness of 1.6 mm or greater in certain example embodiments. In certain example embodiments, the first substrate is less than 2 mm and the second substrate is greater than 2 mm.

In other example embodiments the thickness of the silver layer may be around 80 mg/sqft to 95 mg/sqft, more preferably about 90 mg/sqft.

The features, aspects, advantages, and example embodiments described herein may be combined in any suitable combination or sub-combination to realize yet further embodiments. '

### BRIEF DESCRIPTION OF THE DRAWINGS

These and other features and advantages may be better and more completely understood by reference to the following detailed description of exemplary illustrative embodiments in conjunction with the drawings, of which:
FIGURE 1 is an illustrative cross-sectional view showing the components of an exemplary improved mirror in accordance with an example embodiment;
FIGURE 2 is an illustrative cross-sectional view of an exemplary improved mirror in accordance with another example embodiment;
FIGURE 3 is an illustrative cross-sectional view of the exemplary improved mirror of Fig. 2 after bonding has taken place in accordance with an example embodiment;
FIGURE 4 is an illustrative cross-sectional view of an exemplary mirror coating stack in accordance with an example embodiment; and
FIGURE 5 is a flowchart of an illustrative process for making an exemplary improved mirror according to an example embodiment.

### DETAILED DESCRIPTION OF EXAMPLE EMBODIMENTS OF THE INVENTION

Certain example embodiments may relate to mirrors comprising two glass substrates, a mirror coating, and a laminate.

High reflectance rates in mirrors may sometimes be achieved by using a high transmission glass substrate. Mirrors using high transmission glass in CSP applications may be constructed as follows. A glass substrate of about 4 mm may be first prepared (e.g., polished) to remove debris, etc. The prepared glass substrate may be backed by a layered coating that may consist of or comprise tin (e.g., deposited or otherwise disposed from a tin chloride bath), silver, and copper. The coating may be backed by one or more painted layers, e.g., in order to help protect the coating from the environment (e.g., oxidization of the copper and/or silver) or other harms (scratches, etc). As is known, the painted layer may include a certain amount of lead. Furthermore, the UV radiation from the sun may penetrate the reflective coating and cause damage to the painted layer. This may result in a need to increase the silver layer of the mirror coating in order to provide better UV protection to the painted layer. Accordingly, mirrors for CSP applications produced as discussed above may be able to achieve reflectance rates of about 93%. As is known, however, the higher the desired transmission rate of a piece of glass, the more costly it may be. Thus, it will be appreciated that it would be desirable to achieve the benefits of high transmission glass at lower costs, e.g., while at least maintaining (and sometimes improving) structural stability.

The inclusion of a back glass substrate may be advantageous in certain example instances. For instance, in CSP or CPV desert installations, the nominally protective paint layer may be chipped or otherwise damaged by virtue of the harsh conditions (such as, for example, sand blasts from sand storms, high wind conditions, or the like). The inclusion of a back glass substrate in certain example embodiments may help reduce these and/or other concerns.

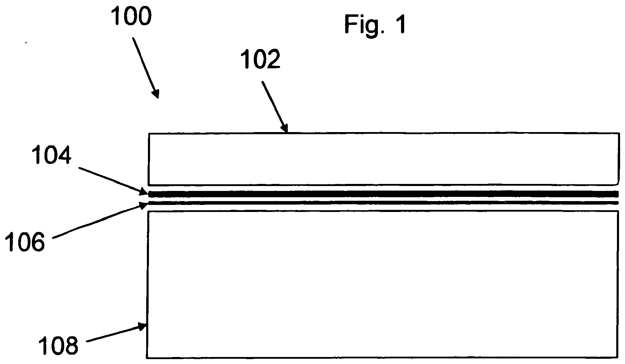

Referring now more particularly to the drawings in which like reference numerals indicate like parts throughout the several views. Fig. 1 is an illustrative cross-sectional view of an exemplary improved mirror in accordance with an example embodiment. An improved mirror 100 with a first glass substrate 102 may be provided.

A second glass substrate 108 may be provided at the rear of the improved mirror 100 (e.g., opposite the first glass substrate and where the sun hits the mirror). A reflective coating (described in greater detail below) 104 may be disposed (e.g., deposited) between the first glass substrate and the second glass substrate. Also disposed (e.g., deposited) between the first glass substrate and the second glass substrate may be a laminate 106. As discussed below, laminate 106 may act to bond the two glass substrates together. Once the glass substrates have been bonded, they may provide protection from the elements for the reflective coating 104.

The first glass substrate 102 is composed of low iron/high transmission glass. As discussed above, it may be desirable to use high transmission glass to improve the overall reflectivity percentage of the mirror. One technique of producing high transmission glass is by producing low iron glass. See, for example, U.S. Patent Nos. 7,700,870; 7,557,053; and 5,030,594, U.S. Application Serial No. 12/385,318, and U.S. Publication Nos. 2006/0169316; 2006/0249199; 2007/0215205; 2009/0223252; 2010/0122728; and 2009/0217978, the entire contents of each of which are hereby incorporated herein by reference.

An exemplary soda-lime-silica base glass according to certain embodiments of this invention, on a weight percentage basis, includes the following basic ingredients:

**TABLE 1: EXAMPLE BASE GLASS**

| Ingredient | Wt. % |
|---|---|
| SiO₂ | 67 - 75 % |
| Na2O | 10 - 20% |
| CaO | 5 - 15 % |
| MgO | 0 - 7 % |
| Al₂O₃ | 0 - 5 % |
| K₂O | 0 - 5 % |

Other minor ingredients, including various conventional refining aids, such as SO₃, carbon, and the like may also be included in the base glass. In certain embodiments, for example, glass herein may be made from batch raw materials silica sand, soda ash, dolomite, limestone, with the use of sulfate salts such as salt cake (Na₂SO₄) and/or Epsom salt (MgSO₄ x 7H₂O) and/or gypsum (e.g., about a 1:1 combination of any) as refining agents. In certain example embodiments, soda-lime-silica based glasses herein include by weight from about 10-15% Na₂O and from about 6-12% CaO.

In addition to the base glass (e.g., see Table 1 above), in making glass according to certain example embodiments of the instant invention the glass batch includes materials (including colorants and/or oxidizers) which cause the resulting glass to be fairly neutral in color (slightly yellow in certain example embodiments, indicated by a positive b* value) and/or have a high visible light transmission. These materials may either be present in the raw materials (e.g., small amounts of iron), or may be added to the base glass materials in the batch (e.g., antimony and/or the like). In certain example embodiments of this invention, the resulting glass has visible transmission of at least 75%, more preferably at least 80%, even more preferably of at least 85%, and most preferably of at least about 90% (sometimes at least 91%) (Lt D65).

In certain embodiments of this invention, in addition to the base glass, the glass and/or glass batch comprises or consists essentially of materials as set forth in Table 2 below (in terms of weight percentage of the total glass composition):

**TABLE 2: EXAMPLE ADDITIONAL MATERIALS IN GLASS**

| Ingredient | General (Wt.%) | More Preferred | Most Preferred |
|---|---|---|---|
| total iron (expressed as Fe₂O₃) | 0.001 - 0.06% | 0.005 - 0.045% | 0.01 - 0.03% |
| %FeO | 0 - 0.0040% | 0 - 0.0030% | 0.001 - 0.0025% |
| glass redox (FeO/total iron | <= 0.10 | <= 0.06 | <= 0.04 |
| cerium oxide | 0 - 0.07% | 0 - 0.04% | 0 - 0.02% |
| antimony oxide | 0.01 - 1.0% | 0.01 - 0.5% | 0.1 - 0.3% |
| SO₃ | 0.1 - 1.0% | 0.2 - 0.6% | 0.25 - 0.5% |
| TiO₂ | 0 - 1.0% | 0.005 - 0.4% | 0.01 - 0.04% |

In certain example embodiments, the antimony may be added to the glass batch in the form of one or more of Sb₂O₃ and/or NaSbO₃. Note also Sb(Sb₂O₅). The use of the term antimony oxide herein means antimony in any possible oxidation state, and is not intended to be limiting to any particular stoichiometry.

The low glass redox evidences the highly oxidized nature of the glass. Due to the antimony (Sb), the glass is oxidized to a very low ferrous content (% FeO) by combinational oxidation with antimony in the form of antimony trioxide (Sb₂O₃), sodium antimonite (NaSbO₃), sodium pyroantimonate (Sb(Sb₂O₅)), sodium or potassium nitrate and/or sodium sulfate. In certain example embodiments, the composition of the glass substrate 1 includes at least twice as much antimony oxide as total iron oxide, by weight, more preferably at least about three times as much, and most preferably at least about four times as much antimony oxide as total iron oxide.

In certain example embodiments of this invention, the colorant portion is substantially free of other colorants (other than potentially trace amounts). However, it should be appreciated that amounts of other materials (e.g., refining aids, melting aids, colorants and/or impurities) may be present in the glass in certain other embodiments of this invention without taking away from the purpose(s) and/or goal(s) of the instant invention. For instance, in certain example embodiments of this invention, the glass composition is substantially free of, or free of, one, two, three, four or all of: erbium oxide, nickel oxide, cobalt oxide, neodymium oxide, chromium oxide, and selenium. The phrase "substantially free" means no more than 2 ppm and possibly as low as 0 ppm of the element or material.

The total amount of iron present in the glass batch and in the resulting glass, i.e., in the colorant portion thereof, is expressed herein in terms of Fe₂O₃ in accordance with standard practice. This, however, does not imply that all iron is actually in the form of Fe₂O₃ (see discussion above in this regard). Likewise, the amount of iron in the ferrous state (Fe⁺²) is reported herein as FeO, even though all ferrous state iron in the glass batch or glass may not be in the form of FeO. As mentioned above, iron in the ferrous state (Fe²⁺; FeO) is a blue-green colorant, while iron in the ferric state (Fe³⁺) is a yellow-green colorant; and the blue-green colorant of ferrous iron is of particular concern, since as a strong colorant it introduces significant color into the glass which can sometimes be undesirable when seeking to achieve a neutral or clear color.

In view of the above, glasses according to certain example embodiments of this invention achieve a neutral or substantially clear color and/or high visible transmission. In certain embodiments, resulting glasses according to certain example embodiments of this invention may be characterized by one or more of the following transmissive optical or color characteristics when measured at a thickness of from about 1mm - 6mm (most preferably a thickness of about 3-4 mm; this is a non-limiting thickness used for purposes of reference only) (Lta is visible transmission %). It is noted that in the table below the a* and b* color values are determined per III. D65, 10 degree Obs.

**TABLE 3: GLASS CHARACTERISTICS OF EXAMPLE EMBODIMENTS**

| Characteristic | General | More Preferred | Most Preferred |
|---|---|---|---|
| Lta (Lt D65): | >= 85% | >= 90% | >= 91% |
| %τe (ISO 9050): | >= 85% | >= 90% | >= 91% |
| % FeO (wt. %): | <= 0.004% | = 0.003% | <= 0.0020% |
| L* (Ill. D65, 10 deg.): | 90-99 | n/a | n/a |
| a* (Ill. D65, 10 deg.): | -1.0 to +1.0 | -0.5 to +0.5 | -0.2 to 0.0 |
| b* (Ill. D65, 10 deg.): | 0 to +1.5 | +0.1 to +1.0 | +0.2 to +0.7 |

First glass substrate 102, in addition to being composed of high transmission or low iron glass, may be thinner than is conventional for mirrors used in CSP applications. In certain example embodiments, the first glass substrate may be between .5 mm and 3 mm thick, more preferably between 1 mm and 2 mm thick, and most preferably between around 1.5 mm and 1.6 mm thick. The second substrate 108 may have a conventional or increased thickness, e.g., so as to help provide structural robustness for the overall mirror 100. Thus, in certain example instances, any structural rigidity "lost" by virtue of making the first substrate 102 thinner may be compensated for by providing a second substrate 108 at the same or increased thickness.

It will be appreciated that the transmission properties of the second glass substrate may not be a factor in the overall efficiency of the mirror. Accordingly, any type of glass may be used. For example, a soda lime float glass of any commercial grade or tint may be used. Further, while the first glass substrate 102 may be composed of low iron glass, the second glass substrate may be composed of high or higher iron glass. It will be appreciated that because the specific type of glass is not a factor in the production of improved mirror 100, any type of glass may be used (e.g., low cost glass) for the second glass substrate 108

Further, as the transmission properties of the second glass substrate 108 may not be a factor, as indicated above, the second glass substrate 108 may be applied in varying thickness to the back of the improved mirror 100. For example, in certain embodiments the thickness of the first glass substrate may be approximately 1.5 mm and the thickness of the second glass substrate may be approximately 5 mm. Once the bonding process between the two glass substrates is complete, the structural strength of the first glass substrate will be reinforced (e.g., added to) by the structural strength of the second glass substrate. Thus, the total structural strength of the above example embodiment may be approximately equal to a single glass substrate of around 6.5mm in certain example instances.

Accordingly, a thin, high transmission glass substrate may be paired with a lower cost, thicker piece of glass to form an improved mirror with the structural strength sufficient to withstand the harsh environmental conditions that may accompany CSP applications

In addition to contributing to the overall structural strength of the improved mirror 100, the second substrate 108 may provide additional integrity to the improved mirror 100. For example, if the front glass substrate 102 cracks or breaks, the bonded second glass substrate 108 may help provide structural integrity to the overall mirror so as to help hold the broken pieces of the front glass substrate in place 102, e.g., because the PVB helps hold the two substrates (including the broken pieces of glass) together. Accordingly, the improved mirror may continue to be functional with little or no loss in reflected energy. This may further allow personnel the time needed to replace the broke glass substrate. Removal may also be facilitated, e.g., by helping to maintain the shards in the overall assembly with the aid of the laminate and the second substrate 108.

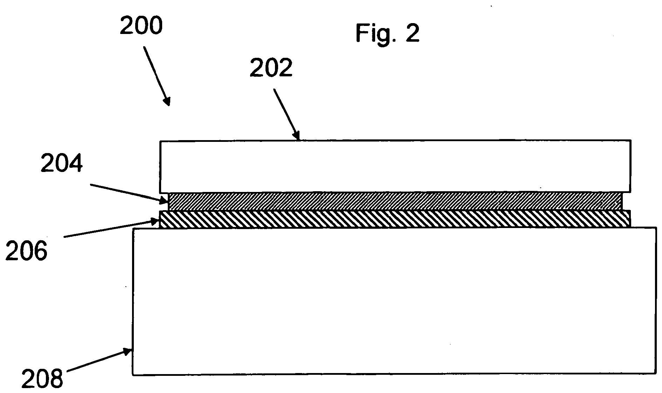

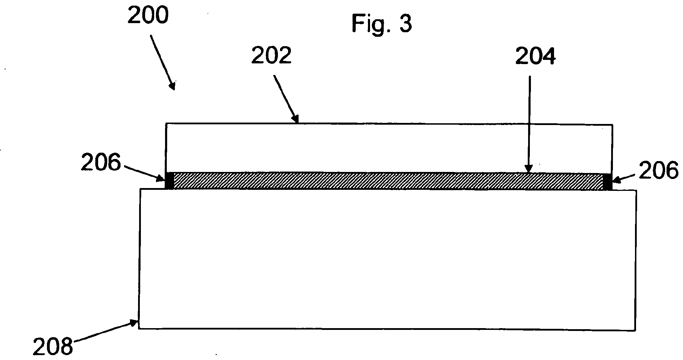

Fig. 2 is an illustrative cross-sectional view of an exemplary improved mirror in accordance with another example embodiment, and Fig. 3 is an illustrative cross-sectional view of the exemplary improved mirror of Fig. 2 after bonding has taken place in accordance with an example embodiment. Improved mirror 200 may have a first glass substrate 202 and a second glass substrate 208. A reflective coating 204 and a laminate 206 may be located between the two substrates 202 and 208. In this illustrative view the example embodiment is shown with the reflective coating 204 removed from the peripheral of the first glass substrate 202. Further, second glass substrate 208 may be dimensioned differently (e.g., have larger dimensions) than first glass substrate 202. As shown in Fig. 2, the first and second substrates 202 and 208 are substantially flat and are oriented in substantially parallel relation to one another.

Reflective coating 204 may be removed from (or not applied to) the edges of the first glass substrate 202. This may facilitate, for example, protection of the reflective coating 204 from the environment. As shown in the post-bonding view of Fig. 3, laminate 206 may form a seal around the outer edges of the first glass substrate 202. In the Fig. 3 example view, the laminate 206 is shown only at the periphery of the first substrate 202. However, in different embodiments, the laminate may be provided along substantially all of the first and/or second substrates 202 and 208 including, for example, at the peripheral edges thereof. In any event, the seal formed by laminate 206 may in certain example instances help seal the reflective coating from the outside environment. This may help to reduce the likelihood of the deterioration of the reflective coating (e.g., through oxidization, exposure to the outside environment, etc.).

In certain example embodiments the edge deletion of the reflective coating with respect to the outer edge of the first glass substrate may be between about 0.5 mm and 5 mm or more preferably between about .7 and 3 mm.

In certain example embodiments, the dimensions of the second glass substrate may be larger than the dimensions of the first glass substrate. This may, for example, facilitate the protection of the reflective coating 206 from the outside environment

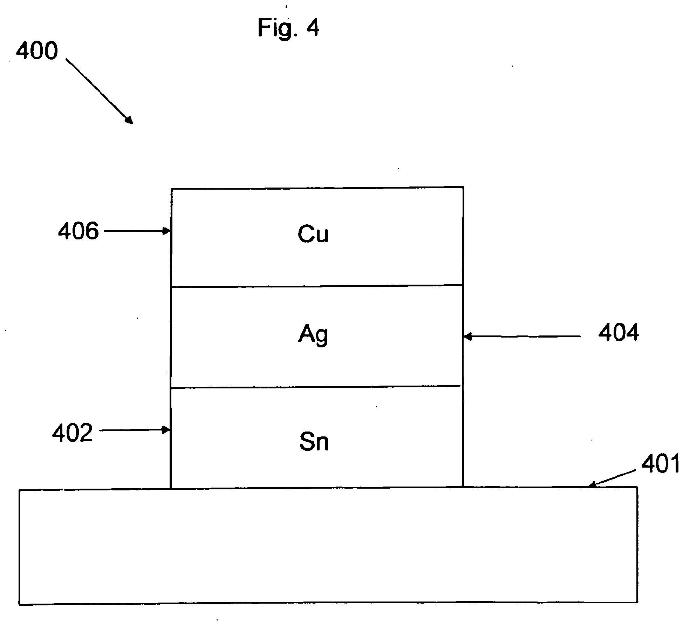

Fig. 4 is an illustrative cross-sectional view of an exemplary mirror coating, such as 204 in Fig. 2, in accordance with an example embodiment. The mirror coating is supported by a glass substrate 401. While silver may be a preferred material for its high reflectivity (between about 95% and 99% in most visible and infrared spectrums), additional materials may be applied in conjunction with silver. For instance, silver disposed (e.g., deposited) onto a glass substrate may not bond well with the underlying glass substrate. As such, tin (e.g., deposited or otherwise disposed using tin chloride) may be used to prepare the glass surface and to facilitate the bonding of the silver to the glass surface. Thus, in application, the first layer 402 of reflective coating 400 may include tin (e.g., tin chloride) to prepare the glass substrate for the second, middle layer 404. The middle layer may be silver or another reflective material (e.g., aluminum). A third layer 406 of copper and/or metal oxides may also be used to increase the durability of the reflective coating. The reflective layer 404 may be provided over and contacting the tin-inclusive layer 402 in certain example embodiments, and the Cu-based and/or metal oxides protective layer may be provided over and contacting the reflective layer 404 in certain example embodiments.

As the reflective coating is sealed between the two glass substrates after the laminate bonding process, the thickness of the Ag and Cu layers in certain embodiments may be around 1000Å and 350Å respectively. In other example embodiments the surface density of the silver layer may be around 80 mg/sqft to 95 mg/sqft, more preferably about 90 mg/sqft. Further, in certain example embodiments, as there may be no protective paint layer backing the reflective coating, the need for an increased silver thickness may be reduced (and sometimes even eliminated). Thus, the silver layer may be less than thick than is normally required in conventional mirrors for CSP applications. Thus, certain example embodiments may not include a layer of paint over the mirror coating.

Accordingly, certain example embodiments may result in an overall reflectivity rating of greater than 90%, more preferably greater than 93%, and sometimes even greater than or equal to 94.5%.

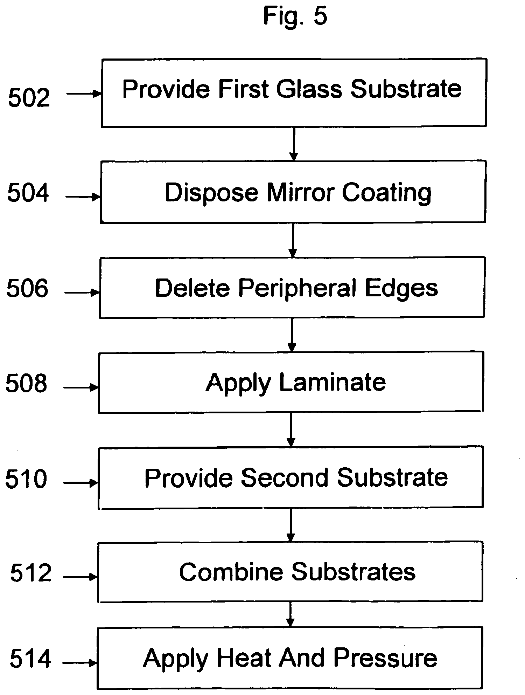

Fig. 5 is a flowchart of an illustrative process for making an exemplary improved mirror according to an example embodiment. In step 502, a first glass substrate is provided. As discussed above, the first glass substrate may be a low iron, high transmission piece of glass with a thickness, for example, of between around 1.5 mm and 1.6 mm. Once the first substrate is provided, in step 504 a mirror coating may be disposed (e.g., deposited) on an inner surface thereof. Various techniques for disposing the mirror coating may be used. For example, the tin layer may be applied to prepare the surface of the glass to receive the silver and copper layers. The silver and copper layers may be disposed (e.g., deposited) onto the first glass substrate by a disposition process such as sputtering or the like.

With the mirror coating in place, in step 506, the mirror coating may then be deleted from around the edges of the first glass substrate. It will be appreciated that deletion of the peripheral edges may instead be replaced by placing a mask over the inner surface of the glass substrate. A mask may, for example, be placed around the edges of the inner surface of the first glass substrate. After disposing a mirror coating, the mask may then be removed, leaving an uncoated area proximate to the edge.

In step 508, a laminate may be applied. Polyvinyl butyral (PVB), ethyl vinyl acetate (EVA), or the like, may be used in certain example embodiments. In certain example embodiments, the PVB thickness may range from 0.1-1.0 mm, more preferably 0.38 or 0.76 mm. In certain example embodiments, the particular laminate material may be formulated so to help provide for long term durability and good adhesion over time. Other laminates with similar adhesion strength, sealing, durability, and/or other qualities may also be used. For example, one-, two-, or more-part urethanes may be used in certain example embodiments. Adhesives (e.g., pressure sensitive adhesives) also may be used in certain example embodiments. In step 510, a second glass substrate may be provided. As discussed above the second, the back end, second glass substrate may be of a lower quality (e.g., lower transmission and/or higher iron) of glass. Once the 4 layers of the improved mirror are prepared (e.g., the first glass substrate, the mirror coating, the laminate, and the second glass substrate), the substrates may be combined in step 512 (e.g., oriented proximate to one another) and then subject to heat and pressure in step 514. The heat and/or pressure may facilitate the bonding of the two glass substrates through the laminate. Further, in certain example embodiments the heat and pressure may allow the laminate (e.g., PVB) to become optically clear. Of course, certain laminate materials may be cured by means other than heat and pressure such as, for example, UV curable materials.

Once bonded together, the two glass substrates with the mirror coating sandwiched therebetween may be structurally similar to a single piece of glass. Thus, the newly created mirror may be used in CSP applications or the like.

It will be appreciated that the steps may be performed in various orders and/or certain steps may not be performed at all in different embodiments of this invention. For example, the second glass substrate may be provided in combination with a laminate and/or the deletion of the mirror coating may be performed by using a mask.

It will be appreciated by those skilled in the art that the use of glass substrates with two different compositions may result in the glass substrates having different heating coefficients. For example, the first glass substrate may have a relatively low iron percentage when compared to that of the second glass substrate. As the second glass substrate may have a higher iron count, it may heat up more rapidly than the first glass substrate (e.g., as a result of the iron absorbing more heat). Furthermore, as the second glass substrate has a mirror in front of it the heat transferred through the first glass substrate to the mirror may or may not be passed on to the second glass substrate. Accordingly, the rate of thermal expansion for the first and second glass substrates may be different. It will be appreciated, however, that when the rate of thermal expansion for two laminated materials is different, the laminate may not hold, as the two materials expand and contract at different rates. Thus, identification of a correct heating profile for the laminate for the two materials may be desired. The CTE difference may be of interest, e.g., when infrared (IR) heating is used and/or IR exposure is encountered, given the different IR absorption rates implied by the different iron contents.

One way of approaching this problem is to adjust the amount of heat directed at either or both of the two materials. For example, under "normal" conditions, if the first glass substrate is heating slower than the second glass substrate, techniques may be used that either add heat to the first glass substrate or remove it from the second glass substrate (e.g., through a heat sink). Thus, the first (e.g., low iron) substrate may be preferentially heated in certain example embodiments so as to account for the difference in heating coefficient with respect to the second substrate. A heating profile of the assembly may be developed and optimized in certain example instances, e.g., so as to help ensure that the substrates are appropriately laminated to one another. An example heating profile may take into account the different glass compositions, the presence of the mirror coating on one of the substrates, etc.

Although certain example embodiments have been described as relating to flat, laminated CSP applications, the example embodiments described herein may also be applied to bent (e.g., whether hot bent or cold-bent) mirrors. Furthermore, although certain example embodiments have described a multi-layer mirror coating, different layers may be provided in place of or in addition to the above-described layers in different embodiments. In certain example embodiments, a single reflective layer may be provided. In certain example embodiments, the reflective layer need not be a thin film layer. In addition, or in the alternative, the mirror layer(s) may be located on different surfaces in different embodiments of this invention.

While the example embodiments herein have been applied to flat glass substrates, it will be appreciated that the above techniques may also be applied to curved glass substrates.

As used herein, the terms "peripheral" and "edge" may not mean that the laminate seals are located at the absolute periphery or edge of the glass substrates, but instead mean that the laminate may at least be partially located at or near (e.g., within about 2 mm of) an edge of at least one glass substrate of the mirror. Likewise, "edge" as used herein is not limited to the absolute edge of a glass substrate or coating but also may include an area at or near (e.g., within about 2 mm of) an absolute edge of the substrate(s) or coating.

As used herein, the terms "on," "supported by," and the like should not be interpreted to mean that two elements are directly adjacent to one another unless explicitly stated. In other words, a first layer may be said to be "on" or "supported by" a second layer, even if there are one or more layers therebetween.

## Claims

1. A method of making an article, the method comprising:
providing a first glass substrate, the first substrate having a thickness of 0.5-3 mm, a low-iron content of 0.001 - 0.06 Wt%,
expressed as Fe₂O₃, in terms of weight percentage of the total glass composition and a low redox value of less than or equal to 0.10 expressed as the ratio of FeO to total iron in terms of weight percentage;
disposing a reflective coating on a major surface of the first substrate;
providing a second glass substrate substantially parallel to the first substrate, the second substrate being oriented over the reflective coating, the second substrate being at least as thick as the first substrate;
laminating together the first substrate with the reflective coating disposed thereon and the second substrate,
wherein the reflective article has a reflectivity of at least 90 percent, and
wherein the second substrate includes a major surface area that is larger than a major surface area of the first substrate.

2. The method of claim 1, wherein the thickness of the first substrate is about 1.6mm.

3. The method of claim 1, wherein the laminating is accomplished using polyvinyl butyral, PVB, preferably wherein the PVB has a thickness 0.1- 1.0 mm.

4. The method of claim 1, further comprising deleting 0.5-5 mm of the reflective coating from around a periphery of the first substrate.

5. The method of claim 1, wherein the second substrate is at least twice as thick as the first substrate.

6. The method of claim 5, wherein the second substrate includes more iron than the first substrate.

7. The method of claim 1, wherein the reflective coating comprises a plurality of thin film layers including a silver-based layer and a copper-based layer over and contacting the silver-based layer.

8. The method of claim 7, wherein the reflective coating further comprises a tin-inclusive layer, the tin-inclusive layer being interposed between and contacting both the first substrate and the silver-based layer.

9. The method of claim 8, wherein the silver-based layer is between about 8omg per square foot to 95mg per square foot, preferably wherein the silver layer is about 90mg per square foot, 1 foot = 30.48 cm.

10. The method of claim 1, wherein the laminating involves heating the first and second substrates according to a heating profile that takes into account the different compositions of the first and second substrates, wherein the heating profile involves preferentially heating the first substrate.

11. A method of making an article, the method comprising:
providing a first glass substrate, the first substrate having a thickness of 0.5-3 mm, a low-iron content of 0.001 - 0.06 Wt%,
expressed as Fe2O3, in terms of weight percentage of the total glass composition and a low redox value of less than or equal to 0.10 expressed as the ratio of FeO to total iron in terms of weight percentage;
disposing a multi-layer thin-film reflective coating on a major surface of the first substrate, the reflective coating comprising, in order moving away from the substrate, an tin-inclusive layer, an Ag-inclusive layer directly contacting the tin-inclusive layer, and a copper-inclusive layer directly contacting the Ag-inclusive layer;
providing a second glass substrate substantially parallel to the first substrate, the second substrate being oriented over the reflective coating, the second substrate being at least as thick as the first substrate, the second substrate having an iron content higher than the iron content of the first substrate;
laminating together the first substrate with the reflective coating disposed thereon and the second substrate using a heating profile selected to account for the different heating profiles of the first and second substrates caused by the differing iron contents,
wherein the second substrate includes a major surface area that is larger than a major surface area of the first substrate.

12. The method of claim 11, wherein the second substrate is two or more times as thick as the first substrate.

13. The method of claim 12, wherein the first substrate is less than 2 mm thick and wherein the second substrate is greater than 2 mm thick.

14. The method of claim 11, wherein the heating profile further accounts for the presence of the reflective coating on the first substrate.

15. A coated article, comprising:
a first glass substrate (102, 202) having a thickness of 0.5-3mm, a low-iron content of 0.001 - 0.06 Wt%,
expressed as Fe2O3, in terms of weight percentage of the total glass composition and a low redox value of less than or equal to 0.10 expressed as the ratio of FeO to total iron in terms of weight percentage;
a reflective coating (104, 204) comprising a plurality of thin film layers disposed on a major surface of the first substrate (102, 202); and
a second substrate (108, 208) that is substantially parallel to the first high transmission substrate (102, 202), the second substrate (108, 208) having a higher iron content than the first substrate (102, 202) and being at least twice as thick as the first substrate (102, 202),
wherein the first (102, 202) and second (108, 208) substrates are laminated together with PVB, the PVB hermetically sealing the reflective coating (104, 204) between the first (102, 202) and second (108, 208) substrates, and
wherein the reflective article has a reflectivity above 90 percent, and wherein the second substrate (108, 208) includes a major surface area that is larger than a major surface area of the first substrate (102, 202).

## Patentansprüche

1. Verfahren zur Herstellung eines Gegenstands, wobei das Verfahren umfasst:
Bereitstellen eines ersten Glassubstrats, wobei das erste Substrat eine Dicke von 0,5-3 mm, einen niedrigen Eisengehalt von 0,001 - 0,06 Gew.-%, ausgedrückt als Fe2O3, in Gewichtsprozent der gesamten Glaszusammensetzung, und einen niedrigen Redoxwert von weniger als oder gleich 0,10, ausgedrückt als das Verhältnis von FeO zu Gesamteisen in Gewichtsprozent, aufweist;
Anordnen einer reflektierenden Beschichtung auf einer Hauptoberfläche des ersten Substrats;
Bereitstellen eines zweiten Glassubstrats im Wesentlichen parallel zu dem ersten Substrat, wobei das zweite Substrat über der reflektierenden Beschichtung orientiert ist, wobei das zweite Substrat mindestens so dick wie das erste Substrat;
Laminieren des ersten Substrats mit der darauf angeordneten Reflexionsschicht und dem zweiten Substrat,
wobei der reflektierende Gegenstand ein Reflexionsvermögen von mindestens 90 Prozent aufweist, und
wobei das zweite Substrat eine Hauptoberfläche aufweist, die größer als eine Hauptoberfläche des ersten Substrats ist.

2. Verfahren nach Anspruch 1, wobei die Dicke des ersten Substrats etwa 1,6 mm beträgt.

3. Verfahren nach Anspruch 1, wobei das Laminieren unter Verwendung von Polyvinylbutyral, PVB, durchgeführt wird, vorzugsweise wobei das PVB eine Dicke von 0,1- 1,0 mm aufweist.

4. Verfahren nach Anspruch 1, ferner umfassend Entfernen von 0,5-5 mm der reflektierenden Beschichtung von einer Peripherie des ersten Substrats herum.

5. Verfahren nach Anspruch 1, wobei das zweite Substrat mindestens doppelt so dick ist wie das erste Substrat.

6. Verfahren nach Anspruch 5, wobei das zweite Substrat mehr Eisen enthält als das erste Substrat.

7. Verfahren nach Anspruch 1, wobei die reflektierende Beschichtung eine Vielzahl von Dünnfilmschichten einschließlich einer Schicht auf Silberbasis und einer Schicht auf Kupferbasis über und in Kontakt mit der Schicht auf Silberbasis umfasst.

8. Verfahren nach Anspruch 7, wobei die reflektierende Beschichtung weiterhin eine Zinn-inklusive-Schicht umfasst, wobei die Zinn-inklusive-Schicht zwischen dem ersten Substrat und der Schicht auf Silberbasis angeordnet ist und diese kontaktiert.

9. Verfahren nach Anspruch 8, wobei die Schicht auf Silberbasis zwischen etwa 80 mg pro Quadratfuß und 95 mg pro Quadratfuß liegt, vorzugsweise wobei die Silberschicht etwa 90 mg pro Quadratfuß, 1 Fuß = 30,48 cm, beträgt.

10. Verfahren nach Anspruch 1, wobei das Laminieren das Erwärmen des ersten und zweiten Substrats gemäß einem Erwärmungsprofil umfasst, das die unterschiedlichen Zusammensetzungen des ersten und zweiten Substrats berücksichtigt, wobei das Erwärmungsprofil
vorzugsweise Erwärmen des ersten Substrats umfasst.

11. Verfahren zur Herstellung eines Gegenstands, wobei das Verfahren umfasst:
Bereitstellen eines ersten Glassubstrats, wobei das erste Substrat eine Dicke von 0,5-3 mm, einen niedrigen Eisengehalt von 0,001 - 0,06 Gew.-%, ausgedrückt als Fe2O3, in Gewichtsprozent der gesamten Glaszusammensetzung, und einen niedrigen Redoxwert von weniger als oder gleich 0,10, ausgedrückt als das Verhältnis von FeO zu Gesamteisen in Gewichtsprozent, aufweist;
Anordnen einer mehrschichtigen Dünnfilm-Reflexionsschicht auf einer Hauptoberfläche des ersten Substrats, wobei die Reflexionsschicht, um sich von dem Substrat wegzubewegen, eine Zinn-inklusive-Schicht, eine Ag-inklusive-Schicht, die direkt die Zinn-inklusive-Schicht kontaktiert, und eine Kupfer-inklusive-Schicht, die direkt die Ag-inklusive-Schicht kontaktiert, umfasst;
Bereitstellen eines zweiten Glassubstrats im Wesentlichen parallel zu dem ersten Substrat, wobei das zweite Substrat über der reflektierenden Beschichtung orientiert ist, wobei das zweite Substrat mindestens so dick wie das erste Substrat und das zweite Substrat einen höheren Eisengehalt als der Eisengehalt des ersten Substrats aufweist;
Laminieren des ersten Substrats mit der darauf angeordneten reflektierenden Beschichtung und des zweiten Substrats unter Verwendung eines Erwärmungsprofils, das so gewählt ist, dass die unterschiedlichen Erwärmungsprofile des ersten und des zweiten Substrats durch die unterschiedlichen Eisengehalte berücksichtigt werden, wobei das zweite Substrat eine Hauptoberfläche aufweist, die größer als eine Hauptoberfläche des ersten Substrats ist.

12. Verfahren nach Anspruch 11, wobei das zweite Substrat zwei- oder mehrmals so dick ist wie das erste Substrat.

13. Verfahren nach Anspruch 12, wobei das erste Substrat weniger als 2 mm dick ist und das zweite Substrat mehr als 2 mm dick ist.

14. Verfahren nach Anspruch 11, wobei das Erwärmungsprofil weiterhin das Vorhandensein der reflektierenden Beschichtung auf dem ersten Substrat berücksichtigt.

15. Beschichteter Gegenstand, umfassend:
ein erstes Glassubstrat (102, 202) mit einer Dicke von 0,5-3 mm, ein niedriger Eisengehalt von 0,001 - 0,06 Gew.-%,
ausgedrückt als Fe2O3, in Gewichtsprozent der gesamten Glaszusammensetzung, und einen niedrigen Redoxwert von weniger als oder gleich 0,10, ausgedrückt als Verhältnis von FeO zu Gesamteisen in Gewichtsprozent;
eine reflektierende Beschichtung (104, 204) mit einer Vielzahl von Dünnfilmschichten, die auf einer Hauptoberfläche des ersten Substrats (102, 202) angeordnet sind; und ein zweites Substrat (108, 208), das im Wesentlichen parallel zu dem ersten Substrat (102, 202) mit hoher Transmission ist, wobei das zweite Substrat (108, 208) einen höheren Eisengehalt als das erste Substrat (102, 202) aufweist und mindestens doppelt so dick ist wie das erste Substrat (102, 202),
wobei das erste (102, 202) und das zweite (108, 208) Substrat zusammen mit PVB laminiert sind, wobei das PVB die reflektierende Beschichtung (104, 204) zwischen dem ersten (102, 202) und dem zweiten (108, 208) Substrat hermetisch versiegelt, und wobei der reflektierende Gegenstand ein Reflexionsvermögen von über 90 Prozent aufweist und wobei das zweite Substrat (108, 208) eine Hauptoberfläche aufweist, die größer ist als eine Hauptoberfläche des ersten Substrats (102, 202).

## Revendications

1. Procédé de fabrication d'un article, le procédé comprenant :
la fourniture d'un premier substrat de verre, le premier substrat ayant une épaisseur de 0,5 à 3 mm, une faible teneur en fer de 0,001 à 0,06 % en poids, exprimée en Fe₂O₃, en pourcentage en poids par rapport au poids total de la composition de verre, et un faible rédox inférieur ou égal à 0,10, exprimé par le rapport du FeO au fer total, en pourcentage en poids ;
la mise en place d'un revêtement réfléchissant sur une surface principale du premier substrat ;
la fourniture d'un deuxième substrat de verre, sensiblement parallèle au premier substrat, le deuxième substrat étant orienté par-dessus le revêtement réfléchissant, le deuxième substrat étant au moins aussi épais que le premier substrat ;
le contrecollage l'un à l'autre du premier substrat sur lequel a été mis en place le revêtement réfléchissant, et du deuxième substrat,
l'article réfléchissant présentant un facteur de réflexion d'au moins 90 pourcents, et
le deuxième substrat ayant une aire de surface principale plus grande que l'aire de la surface principale du premier substrat.

2. Procédé selon la revendication 1, dans lequel l'épaisseur du premier substrat est d'environ 1,6 mm.

3. Procédé selon la revendication 1, dans lequel le contrecollage est réalisé par utilisation de polyvinylbutyral, de PVB, de préférence dans lequel le PVB a une épaisseur de 0,1 à 1,0 mm.

4. Procédé selon la revendication 1, comprenant en outre la suppression de 0,5 à 5 mm du revêtement réfléchissant, en partant de la périphérie du premier substrat.

5. Procédé selon la revendication 1, dans lequel le deuxième substrat a une épaisseur au moins double de celle du premier substrat.

6. Procédé selon la revendication 5, dans lequel le deuxième substrat contient plus de fer que le premier substrat.

7. Procédé selon la revendication 1, dans lequel le revêtement réfléchissant comprend une pluralité de couches minces comprenant une couche à base d'argent et une couche à base de cuivre par-dessus la couche à base d'argent et en contact avec cette dernière.

8. Procédé selon la revendication 7, dans lequel le revêtement réfléchissant comprend en outre une couche contenant de l'étain, la couche contenant de l'étain étant intercalée entre le premier substrat et la couche à base d'argent et en contact avec les deux.

9. Procédé selon la revendication 8, dans lequel la couche à base d'argent présente une aire surfacique d'environ 80 mg par pied carré à 95 mg par pied carré, de préférence dans lequel la couche d'argent a une aire surfacique d'environ 90 mg par pied carré, 1 pied = 30,48 cm.

10. Procédé selon la revendication 1, dans lequel le contrecollage met en jeu le chauffage du premier et du deuxième substrat selon un profil de montée en température qui prend en compte les différences de composition entre le premier et le deuxième substrat, le profil de montée en température mettant en jeu de préférence le chauffage du premier substrat.

11. Procédé de fabrication d'un article, le procédé comprenant :
la fourniture d'un premier substrat de verre, le premier substrat ayant une épaisseur de 0,5 à 3 mm, une faible teneur en fer de 0,001 à 0,06 % en poids, exprimée en Fe₂O₃, en pourcentage en poids par rapport au poids total de la composition de verre et un faible rédox inférieur ou égal à 0,10, exprimé par le rapport du FeO au fer total, en pourcentage en poids ;
la mise en place d'un revêtement réfléchissant multicouche en couche mince sur une surface principale du premier substrat, le revêtement réfléchissant comprenant, en partant du substrat, une couche contenant de l'étain, une couche contenant de l'Ag en contact direct avec la couche contenant de l'étain, et une couche contenant du cuivre, en contact direct avec la couche contenant de l'Ag ;
la fourniture d'un deuxième substrat de verre sensiblement parallèle au premier substrat, le deuxième substrat étant orienté par-dessus le revêtement réfléchissant, le deuxième substrat étant au moins aussi épais que le premier substrat, le deuxième substrat ayant une teneur en fer supérieure à la teneur en fer du premier substrat ;
le contrecollage du premier substrat sur lequel est mis en place le revêtement réfléchissant et du deuxième substrat par utilisation d'un profil de montée en température choisi de façon à prendre en compte les différents profils de montée en température du premier et du deuxième substrat, provoqués par les différences au niveau des teneurs en fer,
dans lequel le deuxième substrat présente une aire de surface principale qui est plus grande que l'aire de la surface principale du premier substrat.

12. Procédé selon la revendication 11, dans lequel le deuxième substrat est au moins deux fois plus épais que le premier substrat.

13. Procédé selon la revendication 12, dans lequel le premier substrat a une épaisseur inférieure à 2 mm, et dans lequel le deuxième substrat a une épaisseur supérieure à 2 mm.

14. Procédé selon la revendication 11, dans lequel le profil de montée en température prend en outre en compte la présence du revêtement réfléchissant sur le premier substrat.

15. Article revêtu, comprenant :
un premier substrat de verre (102, 202) ayant une épaisseur de 0,5 à 3 mm, une faible teneur en fer de 0,001 à 0,06 % en poids, exprimée en Fe₂O₃, en pourcentage en poids par rapport au poids total de la composition de verre, et un faible rédox, inférieur ou égal à 0,10, exprimé par le rapport du FeO au fer total, en pourcentage en poids ;
un revêtement réfléchissant (104, 204) comprenant une pluralité de couches minces disposées sur une surface principale du premier substrat (102, 202) ; et
un deuxième substrat (108, 208) qui est sensiblement parallèle au premier substrat (102, 202) à grand facteur de transmission, le deuxième substrat (108, 208) ayant une teneur en fer supérieure à celle du premier substrat (102, 202) et ayant une épaisseur au moins double de celle du premier substrat (102, 202),
dans lequel le premier (102, 202) et le deuxième (108, 208) substrat sont contrecollés l'un à l'autre à l'aide de PVB, le PVB assurant un scellement hermétique du revêtement réfléchissant (104, 204) entre le premier (102, 202) et le deuxième (108, 208) substrat, et
l'article réfléchissant présentant un facteur de réflexion supérieur à 90 pourcents, et le deuxième substrat (108, 208) présentant une aire de surface principale plus grande que l'aire de la surface principale du premier substrat (102, 202).
